# EUROPEAN PATENT APPLICATION

(11) **EP 2 924 549 A1**
(43) Date of publication of application: **30.09.2015**
(21) Application number: 13864759.9
(22) Date of filing: 03.07.2013
(51) Int. Cl.: G06F 3/044

(54) **INPUT METHOD AND APPARATUS OF TOUCH SCREEN ELECTRONIC DEVICE**

(30) Priority: 17.12.2012 CN 201210547940
(71) Applicant: Huawei Device Co., Ltd., Shenzhen, Guangdong 518129 (CN)
(72) Inventor: HE, Ruifeng, Shenzhen Guangdong 518129 (CN)
(74) Representative: Maiwald Patentanwalts GmbH
(86) International application number: PCT/CN2013/078712
(87) International publication number: WO 2014/094416

(57) **Abstract**

The present invention discloses an input method and apparatus of a touchscreen electronic device, relates to the field of electronic technologies, and solves a problem that when being used on a touchscreen electronic device, the existing input method is not applicable to the touchscreen electronic device, and when a user touches a screen, an unintended touch is easily caused, leading to an erroneous input. A virtual keyboard is displayed on a touchscreen of the touchscreen electronic device, where the virtual keyboard is configured to input corresponding character information according to a touch operation performed by a user on a character displayed on the virtual keyboard, and some first characters are displayed on the virtual keyboard; a first operation instruction is acquired; and the some first characters displayed on the virtual keyboard are replaced with some other first characters according to the first operation instruction. Embodiments of the present invention are applicable to an input process of a touchscreen electronic device.

## Description

### TECHNICAL FIELD

The present invention relates to the field of electronic technologies, and in particular, to an input method and apparatus of a touchscreen electronic device.

### BACKGROUND

At present, on some touchscreen electronic devices, a simple input operation needs to be performed. However, an existing input method is not applicable to a touchscreen electronic device, and when a user touches a screen, an unintended touch is easily caused, leading to an erroneous input.

### SUMMARY

Embodiments of the present invention provide an input method and apparatus of a touchscreen electronic device, which avoid an erroneous input caused by an unintended touch, and solve an input issue of a touchscreen electronic device.

To achieve the foregoing objectives, the embodiments of the present invention use the following technical solutions:

According to a first aspect, the present invention provides an input method of a touchscreen electronic device, including:
displaying a virtual keyboard on a touchscreen of the touchscreen electronic device, where the virtual keyboard is configured to input corresponding character information according to a touch operation performed by a user on a character displayed on the virtual keyboard, and displaying some first characters on the virtual keyboard;
acquiring a first operation instruction; and
replacing, according to the first operation instruction, the some first characters displayed on the virtual keyboard with some other first characters.

In a first possible implementation manner of the first aspect, the first characters are digits, uppercase letters, lowercase letters, symbols, or emoticons.

In a second possible implementation manner of the first aspect, the method further includes:
displaying an input box on the touchscreen, where
that the virtual keyboard is configured to input corresponding character information according to a touch operation performed by a user on a character displayed on the virtual keyboard specifically is: after the touch operation performed by the user on the character displayed on the virtual keyboard is received, displaying character information corresponding to the touch operation in the input box.

In a third possible implementation manner of the first aspect, the first operation instruction is a slide operation instruction on the touchscreen.

In a fourth possible implementation manner of the first aspect, the slide operation instruction includes: a slide left operation instruction, a slide right operation instruction, a slide up operation instruction, or a slide down operation instruction.

In a fifth possible implementation manner of the first aspect, the method further includes:
displaying one or more toggle keys on the touchscreen, where the toggle key is a digit toggle key, a lowercase letter toggle key, an uppercase letter toggle key, a symbol toggle key, or an emoticon toggle key; and
when a touch instruction on the digit toggle key is acquired, displaying the first characters displayed on the virtual keyboard as digits; or
when a touch instruction on the lowercase letter toggle key is acquired, displaying the first characters displayed on the virtual keyboard as lowercase letters; or
when a touch instruction on the uppercase letter toggle key is acquired, displaying the first characters displayed on the virtual keyboard as uppercase letters; or
when a touch instruction on the symbol toggle key is acquired, displaying the first characters displayed on the virtual keyboard as symbols; or
when a touch instruction on the emoticon toggle key is acquired, displaying the first characters displayed on the virtual keyboard as emoticons.

According to a second aspect, the present invention provides a user interface on a touchscreen electronic device, where the user interface includes:
a virtual keyboard displayed on a touchscreen of the touchscreen electronic device, where the virtual keyboard is configured to input corresponding character information according to a touch operation performed by a user on a character displayed on the virtual keyboard;
some first characters displayed on the virtual keyboard; and
some other first characters displayed on the virtual keyboard, where the some other first characters are acquired by using a first operation instruction on the touchscreen.

In a first possible implementation manner of the second aspect, in the some first characters displayed on the virtual keyboard, the first characters are digits, uppercase letters, lowercase letters, symbols, or emoticons.

In a second possible implementation manner of the second aspect, the user interface further includes:
a displayed input box, where character information displayed in the input box is character information corresponding to a received touch operation performed by the user on the character displayed on the virtual keyboard.

In a third possible implementation manner of the second aspect, the first operation instruction is a slide operation instruction on the touchscreen.

In a fourth possible implementation manner of the second aspect, the slide operation instruction includes: a slide left operation instruction, a slide right operation instruction, a slide up operation instruction, or a slide down operation instruction.

In a fifth possible implementation manner of the second aspect, the user interface further includes:
one or more toggle keys displayed on the touchscreen, where the toggle key is a digit toggle key, a lowercase letter toggle key, an uppercase letter toggle key, a symbol toggle key, or an emoticon toggle key, where
if the first characters displayed on the touchscreen are digits, the digits are displayed by acquiring a touch instruction on the digit toggle key; or
if the first characters displayed on the touchscreen are lowercase letters, the digits are displayed by acquiring a touch instruction on the lowercase letter toggle key; or
if the first characters displayed on the touchscreen are uppercase letters, the digits are displayed by acquiring a touch instruction on the uppercase letter toggle key; or
if the first characters displayed on the touchscreen are symbols, the digits are displayed by acquiring a touch instruction on the symbol toggle key; or
if the first characters displayed on the touchscreen are emoticons, the digits are displayed by acquiring a touch instruction on the emoticon toggle key.

According to a second aspect, the present invention provides an input apparatus of a touchscreen electronic device, including:
a displaying unit, configured to display a virtual keyboard on a touchscreen of the touchscreen electronic device, where the virtual keyboard is configured to input corresponding character information according to a touch operation performed by a user on a character displayed on the virtual keyboard, and display some first characters on the virtual keyboard;
an acquiring unit, configured to acquire a first operation instruction; and
a processing unit, configured to replace, according to the first operation instruction, the some first characters displayed on the virtual keyboard with some other first characters.

In a first possible implementation manner of the second aspect, the first characters displayed by the displaying unit are digits, uppercase letters, lowercase letters, symbols, or emoticons.

In a second possible implementation manner of the second aspect, the displaying unit is further configured to display an input box on the touchscreen, and after the touch operation performed by the user on the character displayed on the virtual keyboard is received, display character information corresponding to the touch operation in the input box.

In a third possible implementation manner of the second aspect, the first operation instruction acquired by the acquiring unit is a slide operation instruction on the touchscreen.

In a fourth possible implementation manner of the second aspect, the slide operation instruction acquired by the acquiring unit includes: a slide left operation instruction, a slide right operation instruction, a slide up operation instruction, or a slide down operation instruction.

In a fifth possible implementation manner of the second aspect, the displaying unit is further configured to display one or more toggle keys on the touchscreen, where the toggle key is a digit toggle key, a lowercase letter toggle key, an uppercase letter toggle key, a symbol toggle key, or an emoticon toggle key; and
the processing unit is further configured to: when a touch instruction on the digit toggle key is acquired, display the first characters displayed on the virtual keyboard as digits; or when a touch instruction on the lowercase letter toggle key is acquired, display the first characters displayed on the virtual keyboard as lowercase letters; or when a touch instruction on the uppercase letter toggle key is acquired, display the first characters displayed on the virtual keyboard as uppercase letters; or when a touch instruction on the symbol toggle key is acquired, display the first characters displayed on the virtual keyboard as symbols; or when a touch instruction on the emoticon toggle key is acquired, display the first characters displayed on the virtual keyboard as emoticons.

In the input method and apparatus of a touchscreen electronic device provided by the embodiments of the present invention, a virtual keyboard is displayed on a touchscreen of the touchscreen electronic device, where the virtual keyboard is configured to input corresponding character information according to a touch operation performed by a user on a character displayed on the virtual keyboard, some first characters are displayed on the virtual keyboard, and the some first characters displayed on the virtual keyboard are replaced with some other first characters according to an acquired first operation instruction. In the embodiments of the present invention, a problem is solved that when being used on a touchscreen electronic device, the existing input method is not applicable to the touchscreen electronic device, and when a user touches a screen, an unintended touch is easily caused, leading to an erroneous input, thereby avoiding an erroneous input caused by an unintended touch, and solving an input issue of a touchscreen electronic device.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a flowchart of an input method of a touchscreen electronic device according to Embodiment 1 of the present invention;
FIG. 2 is a schematic diagram of displaying a virtual keyboard on a touchscreen according to Embodiment 1 of the present invention;
FIG. 3 is a schematic diagram of displaying first characters of another part on the touchscreen according to Embodiment 1 of the present invention;
FIG. 4 is a flowchart of another input method of a touchscreen electronic device according to Embodiment 1 of the present invention;
FIG. 5 is a schematic diagram of displaying an input box on a touchscreen according to Embodiment 1 of the present invention;
FIG. 6 is a schematic diagram of displaying digit information corresponding to a digit toggle key on a virtual keyboard according to Embodiment 1 of the present invention;
FIG. 7 is a schematic diagram of displaying lowercase letter information corresponding to a lowercase letter toggle key on a virtual keyboard according to Embodiment 1 of the present invention;
FIG. 8 is a schematic diagram of displaying uppercase letter information corresponding to an uppercase letter toggle key on a virtual keyboard according to Embodiment 1 of the present invention;
FIG. 9 is a schematic diagram of displaying symbol information corresponding to a symbol toggle key on a virtual keyboard according to Embodiment 1 of the present invention;
FIG. 10 is a schematic diagram of displaying emoticon information corresponding to an emoticon toggle key on a virtual keyboard according to Embodiment 1 of the present invention;
FIG. 11 is a schematic diagram of displaying corresponding information on a virtual keyboard after a user slides left on a touchscreen according to Embodiment 1 of the present invention;
FIG. 12 is a schematic diagram when a space key exists on a virtual keyboard according to Embodiment 1 of the present invention;
FIG. 13 is a schematic diagram when a keyboard hiding key exists on a virtual keyboard according to Embodiment 1 of the present invention;
FIG. 14 is an operation flowchart when a keyboard hiding key exists on a virtual keyboard according to Embodiment 1 of the present invention;
FIG. 15 is a schematic diagram of a user interface disposed on a touchscreen electronic device according to Embodiment 2 of the present invention;
FIG. 16 is a schematic diagram of another user interface disposed on a touchscreen electronic device according to Embodiment 2 of the present invention;
FIG. 17 is a structural diagram of an input apparatus of a touchscreen electronic device according to Embodiment 3 of the present invention; and
FIG. 18 is a structural diagram of a touchscreen electronic device according to Embodiment 4 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

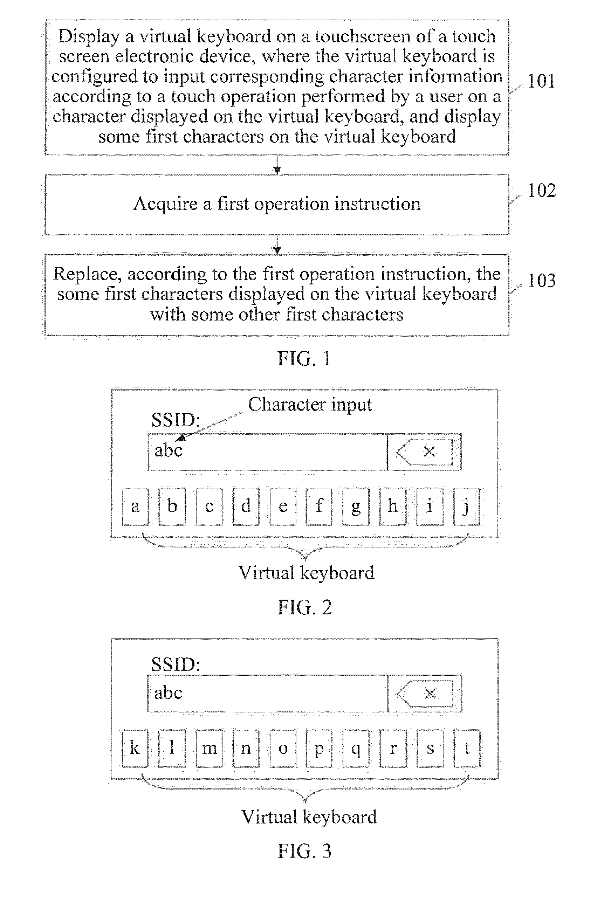

As shown in FIG. 1, an embodiment of the present invention provides an input method of a touchscreen electronic device. This embodiment of the present invention is applicable to a touchscreen electronic device, for example, a small-touchscreen electronic device, or another mobile terminal with a touchscreen. The method includes the following steps:
101: Display a virtual keyboard on a touchscreen of the touchscreen electronic device, where the virtual keyboard is configured to input corresponding character information according to a touch operation performed by a user on a character displayed on the virtual keyboard, and display some first characters on the virtual keyboard.

As shown in FIG. 2, a character is displayed on the virtual keyboard displayed on the touchscreen of the touchscreen electronic device. The user may perform a touch operation on the displayed character, thereby inputting corresponding character information, where some first characters are displayed on the virtual keyboard.

The number of first characters displayed on the virtual keyboard may be determined according to a screen size, a character size, a key spacing, and a line spacing of the touchscreen, which is not limited herein.
102: Acquire a first operation instruction.
103: Replace, according to the first operation instruction, the some first characters displayed on the virtual keyboard with some other first characters.

As shown in FIG. 3, when the first operation instruction input by the user is acquired, the touchscreen electronic device displays some other first characters on the virtual keyboard according to the first operation instruction.

In the input method of a touchscreen electronic device provided by this embodiment of the present invention, a virtual keyboard is displayed on a touchscreen of the touchscreen electronic device, where the virtual keyboard is configured to input corresponding character information according to a touch operation performed by a user on a character displayed on the virtual keyboard, some first characters are displayed on the virtual keyboard, and the some first characters displayed on the virtual keyboard are replaced with some other first characters according to an acquired first operation instruction. In this embodiment of the present invention, a problem is solved that when being used on a touchscreen electronic device, the existing input method is not applicable to the touchscreen electronic device, and when a user touches a screen, an unintended touch is easily caused, leading to an erroneous input, thereby avoiding an erroneous input caused by an unintended touch, and solving an input issue of a touchscreen electronic device.

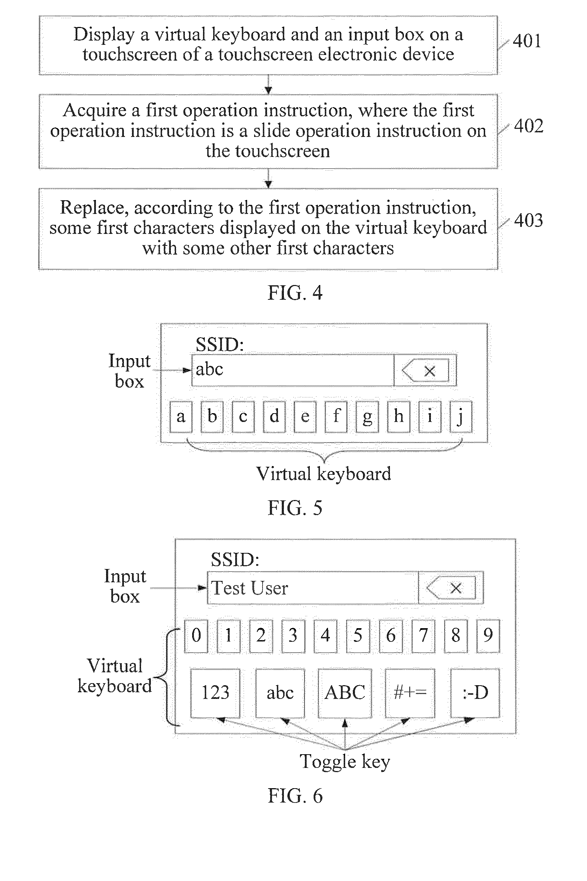

In a first implementation manner of this embodiment of the present invention, an input method of a touchscreen electronic device is provided. As shown in FIG. 4, a touchscreen electronic device is used as an example for description. When the device needs to access a wireless local area network, the device can enter a corresponding network only when the identity of the device is successfully authenticated, that is, the device can enter a corresponding network only when a name the same as an SSID (Service Set Identifier, service set identifier) of a local area network is input on the device. Specific steps are shown as follows:
401: Display a virtual keyboard and an input box on a touchscreen of the touchscreen electronic device.

As shown in FIG. 5, the virtual keyboard is configured to: after a touch operation performed by a user on a character displayed on the virtual keyboard is received, display character information corresponding to the touch operation in the input box.

In addition, in the some first characters displayed on the virtual keyboard, the first characters are digits, uppercase letters, lowercase letters, symbols, or emoticons.

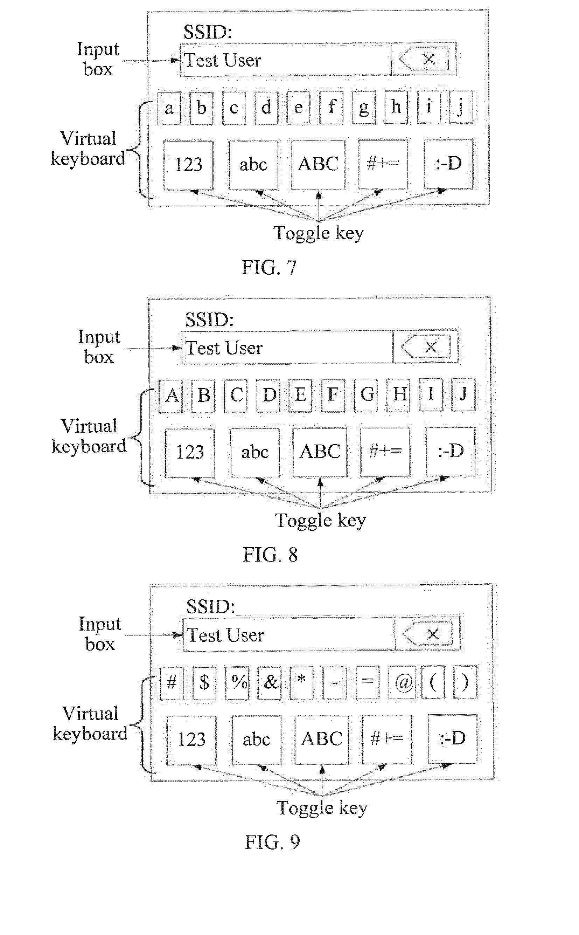

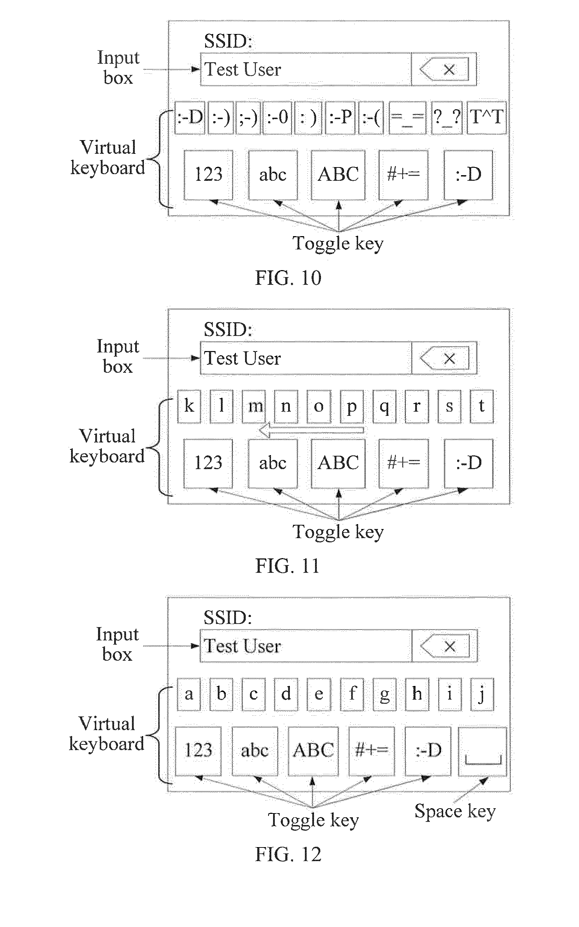

Moreover, one or more toggle keys are displayed on the touchscreen, where the toggle key is a digit toggle key, a lowercase letter toggle key, an uppercase letter toggle key, a symbol toggle key, or an emoticon toggle key, which, as shown in FIG. 6 to FIG. 10, are respectively represented by "123", "abc", "ABC", "#+=" and ":-D". Character information corresponding to any toggle key is displayed on the virtual keyboard by only touching the toggle key on the virtual keyboard by the user, and the number of the toggle keys is not limited in this embodiment of the present invention. When touch instructions on different toggle keys are received, different first characters are displayed on the virtual keyboard. Implementation manners are shown as follows:
a. When a touch instruction on the digit toggle key is acquired, as shown in FIG. 6, display the first characters displayed on the virtual keyboard as digits.
b. When a touch instruction on the lowercase letter toggle key is acquired, as shown in FIG. 7, display the first characters displayed on the virtual keyboard as lowercase letters.
c. When a touch instruction on the uppercase letter toggle key is acquired, as shown in FIG. 8, display the first characters displayed on the virtual keyboard as uppercase letters.
d. When a touch instruction on the symbol toggle key is acquired, as shown in FIG. 9, display the first characters displayed on the virtual keyboard as symbols.
e. When a touch instruction on the emoticon toggle key is acquired, as shown in FIG. 10, display the first characters displayed on the virtual keyboard as emoticons.

The number of first characters displayed on the virtual keyboard may be determined according to a screen size, a character size, a key spacing, and a line spacing of the touchscreen, which is not limited herein.
402: Acquire a first operation instruction, where the first operation instruction is a slide operation instruction on the touchscreen.

The slide operation instruction includes: a slide left operation instruction, a slide right operation instruction, a slide up operation instruction, or a slide down operation instruction.
403: Replace, according to the first operation instruction, some first characters displayed on the virtual keyboard with some other first characters.

Because some first characters are displayed on the virtual keyboard, when the user needs to acquire some other first characters, the user performs a slide left operation, a slide right operation, a slide up operation, or a slide down operation on the touchscreen, so that the touchscreen electronic device acquires a corresponding instruction, and displays some other first characters on the virtual keyboard.

When the first characters displayed on the virtual keyboard only display a line of character information, as shown in FIG. 6, FIG. 7, FIG. 8, FIG. 9 and FIG. 10, if a character needs to be input by the user is not a currently displayed character, the user may update the displayed character information by performing a slide left operation, a slide right operation, a slide up operation, or a slide down operation, thereby finding the character to be input.

For example, when the lowercase letter information shown in FIG. 7 does not include an m that a user wants to input, as shown in FIG. 11, the user slides left on the touchscreen, and finds the letter m after the virtual keyboard updates displayed letter information. When the virtual keyboard displays 10 pieces of letter information, for 26 pieces of letter information, one round of letter information selection can be performed by only performing 3 slide operations.

In a second implementation manner of this embodiment of the present invention, as shown in FIG. 12, when a space key exists on the virtual keyboard, the method further includes:
acquiring a space key input by the user by touching the virtual keyboard, and displaying the space key in the input box.

The space key is separately set to improve user experience, and facilitate input. The space key may also be set in special character information, which is not limited herein.

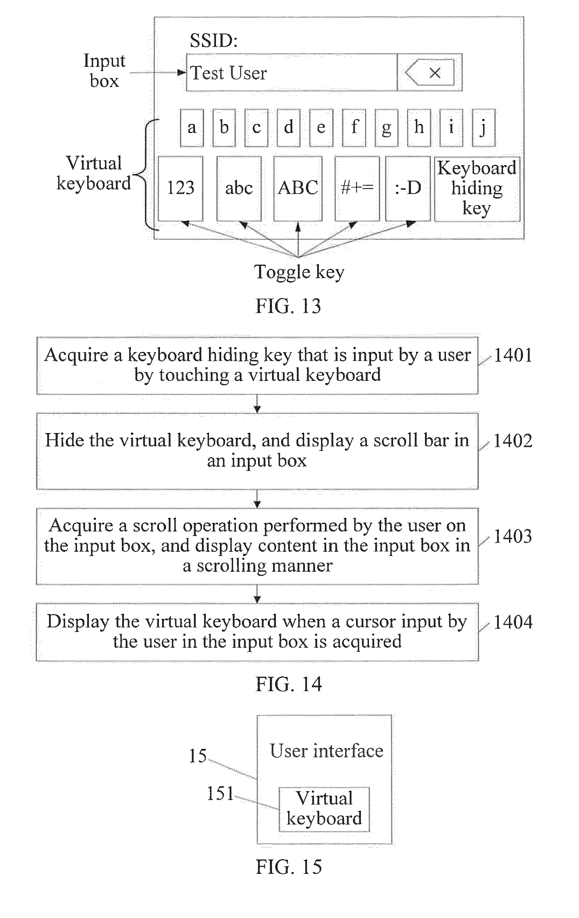

In a third implementation manner of this embodiment of the present invention, as shown in FIG. 13, when a keyboard hiding key exists on the virtual keyboard, as shown in FIG. 14, the method further includes the following steps:
1401: Acquire a keyboard hiding key that is input by a user by touching the virtual keyboard.
1402: Hide the virtual keyboard, and display a scroll bar in the input box.

Because the input box in this embodiment of the present invention can only display one line of input information, when the user wants to perform a next-line input, the user first needs to hide the virtual keyboard, so that the scroll bar in the input box is displayed, to facilitate a user operation.
1403: Acquire a scroll operation performed by the user on the input box, and display content in the input box in a scrolling manner.
1404: Display the virtual keyboard when a cursor input by the user in the input box is acquired.

The implementation manner shown in FIG. 14 is to display the input box in a scrolling manner by hiding the virtual keyboard, which is commonly used in the prior art, and acquiring the scroll operation performed by the user on the input box, and then display the virtual keyboard when acquiring the cursor that the user inputs to an input line to be displayed.

In this embodiment of the present invention, a character size, a key size, a key spacing, and a line spacing that are displayed on the virtual keyboard may all vary with screen sizes of different touchscreen electronic devices, which are not limited herein.

By using this embodiment of the present invention, switch input among a digit, a letter, and a special character can be implemented, and selections of different characters can be implemented by a simple slide, thereby reducing a probability of an erroneous input caused by an unintended touch.

### Embodiment 2

This embodiment of the present invention provides a user interface disposed on a touchscreen electronic device. As shown in FIG. 15, the user interface 15 includes:
a virtual keyboard 151 displayed on a touchscreen of the touchscreen electronic device, where the virtual keyboard is configured to input corresponding character information according to a touch operation performed by a user on a character displayed on the virtual keyboard;
some first characters displayed on the virtual keyboard; and
some other first characters displayed on the virtual keyboard, where the some other first characters are acquired by using a first operation instruction on the touchscreen.

With the user interface disposed on a touchscreen electronic device provided by this embodiment of the present invention, a virtual keyboard is displayed on a touchscreen of the touchscreen electronic device, where the virtual keyboard is configured to input corresponding character information according to a touch operation performed by a user on a character displayed on the virtual keyboard, some first characters are displayed on the virtual keyboard, and the some first characters displayed on the virtual keyboard are replaced with some other first characters according to an acquired first operation instruction. In this embodiment of the present invention, a problem is solved that when being used on a touchscreen electronic device, the existing input method is not applicable to the touchscreen electronic device, and when a user touches a screen, an unintended touch is easily caused, leading to an erroneous input, thereby avoiding an erroneous input caused by an unintended touch, and solving an input issue of a touchscreen electronic device.

Optionally, in the some first characters displayed on the virtual keyboard, the first characters are digits, uppercase letters, lowercase letters, symbols, or emoticons.

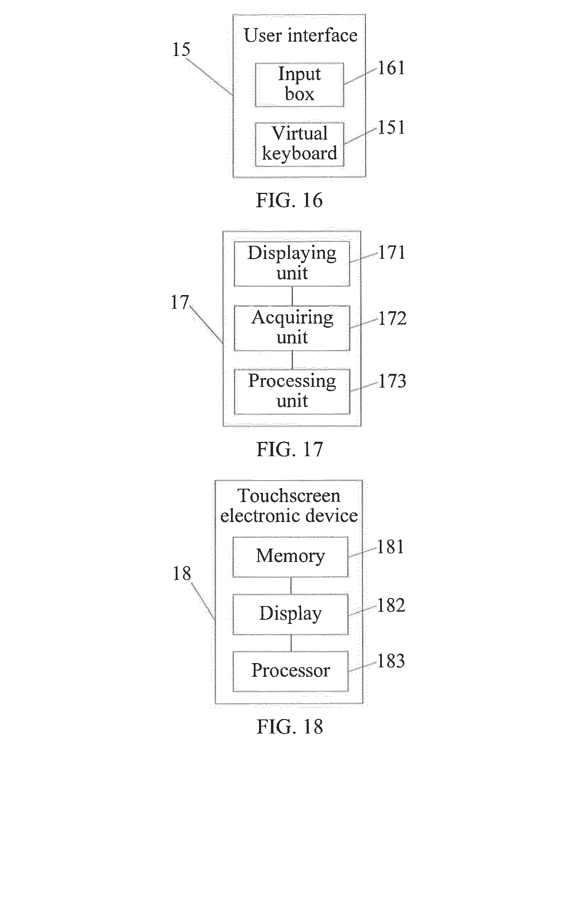

As shown in FIG. 16, the user interface further includes:
a displayed input box 161, where character information displayed in the input box is character information corresponding to a received touch operation performed by the user on the character displayed on the virtual keyboard.

Optionally, the first operation instruction is a slide operation instruction on the touchscreen.

Optionally, the slide operation instruction includes: a slide left operation instruction, a slide right operation instruction, a slide up operation instruction, or a slide down operation instruction.

Optionally, the user interface further includes:
one or more toggle keys displayed on the touchscreen, where the toggle key is a digit toggle key, a lowercase letter toggle key, an uppercase letter toggle key, a symbol toggle key, or an emoticon toggle key, where
if the first characters displayed on the touchscreen are digits, the digits are displayed by acquiring a touch instruction on the digit toggle key; or
if the first characters displayed on the touchscreen are lowercase letters, the digits are displayed by acquiring a touch instruction on the lowercase letter toggle key; or
if the first characters displayed on the touchscreen are uppercase letters, the digits are displayed by acquiring a touch instruction on the uppercase letter toggle key; or
if the first characters displayed on the touchscreen are symbols, the digits are displayed by acquiring a touch instruction on the symbol toggle key; or
if the first characters displayed on the touchscreen are emoticons, the digits are displayed by acquiring a touch instruction on the emoticon toggle key.

### Embodiment 3

This embodiment of the present invention provides an input apparatus 17 of a touchscreen electronic device. As shown in FIG. 17, the apparatus 17 includes a displaying unit 171, an acquiring unit 172, and a processing unit 173, where
the displaying unit 171 is configured to display a virtual keyboard on a touchscreen of the touchscreen electronic device, where the virtual keyboard is configured to input corresponding character information according to a touch operation performed by a user on a character displayed on the virtual keyboard, and display some first characters on the virtual keyboard;
the acquiring unit 172 is configured to acquire a first operation instruction; and
the processing unit 173 is configured to replace, according to the first operation instruction, the some first characters displayed on the virtual keyboard with some other first characters.

With the input apparatus of a touchscreen electronic device provided by this embodiment of the present invention, a virtual keyboard is displayed on a touchscreen of the touchscreen electronic device, where the virtual keyboard is configured to input corresponding character information according to a touch operation performed by a user on a character displayed on the virtual keyboard, some first characters are displayed on the virtual keyboard, and the some first characters displayed on the virtual keyboard are replaced with some other first characters according to an acquired first operation instruction. In this embodiment of the present invention, a problem is solved that when being used on a touchscreen electronic device, the existing input method is not applicable to the touchscreen electronic device, and when a user touches a screen, an unintended touch is easily caused, leading to an erroneous input, thereby avoiding an erroneous input caused by an unintended touch, and solving an input issue of a touchscreen electronic device.

Optionally, the first characters displayed by the displaying unit are digits, uppercase letters, lowercase letters, symbols, or emoticons.

Optionally, the displaying unit is further configured to display an input box on the touchscreen, and after the touch operation performed by the user on the character displayed on the virtual keyboard is received, display character information corresponding to the touch operation in the input box.

Optionally, the first operation instruction acquired by the acquiring unit is a slide operation instruction on the touchscreen.

Optionally, the slide operation instruction acquired by the acquiring unit includes: a slide left operation instruction, a slide right operation instruction, a slide up operation instruction, or a slide down operation instruction.

Optionally, the displaying unit is further configured to display one or more toggle keys on the touchscreen, where the toggle key is a digit toggle key, a lowercase letter toggle key, an uppercase letter toggle key, a symbol toggle key, or an emoticon toggle key; and
the processing unit is further configured to: when a touch instruction on the digit toggle key is acquired, display the first characters displayed on the virtual keyboard as digits; or when a touch instruction on the lowercase letter toggle key is acquired, display the first characters displayed on the virtual keyboard as lowercase letters; or when a touch instruction on the uppercase letter toggle key is acquired, display the first characters displayed on the virtual keyboard as uppercase letters; or when a touch instruction on the symbol toggle key is acquired, display the first characters displayed on the virtual keyboard as symbols; or when a touch instruction on the emoticon toggle key is acquired, display the first characters displayed on the virtual keyboard as emoticons.

For an operation process of the apparatus 17, refer to the processing process of the input method of a touchscreen electronic device.

### Embodiment 4

This embodiment of the present invention provides a touchscreen electronic device 18. As shown in FIG. 18, the touchscreen electronic device includes a memory 181, a display 182, and a processing module 183, where
the memory 181 is configured to store an instruction;
the display 182 is configured to display information on a touchscreen, including an input box and content in the input box, and first characters and key information on a virtual keyboard; and
the processor 183 is configured to execute the instruction in the memory 181, and specifically execute:
displaying a virtual keyboard on a touchscreen of the touchscreen electronic device, where the virtual keyboard is configured to input corresponding character information according to a touch operation performed by a user on a character displayed on the virtual keyboard, and displaying some first characters on the virtual keyboard;
acquiring a first operation instruction; and
replacing, according to the first operation instruction, the some first characters displayed on the virtual keyboard with some other first characters.

In the touchscreen electronic device provided by this embodiment of the present invention, a virtual keyboard is displayed on a touchscreen of the touchscreen electronic device, where the virtual keyboard is configured to input corresponding character information according to a touch operation performed by a user on a character displayed on the virtual keyboard, some first characters are displayed on the virtual keyboard, and the some first characters displayed on the virtual keyboard are replaced with some other first characters according to an acquired first operation instruction. In this embodiment of the present invention, a problem is solved that when being used on a touchscreen electronic device, the existing input method is not applicable to the touchscreen electronic device, and when a user touches a screen, an unintended touch is easily caused, leading to an erroneous input, thereby avoiding an erroneous input caused by an unintended touch, and solving an input issue of a touchscreen electronic device.

Optionally, the processor 183 is further configured to execute:
displaying an input box on the touchscreen, where
that the virtual keyboard is configured to input corresponding character information according to a touch operation performed by a user on a character displayed on the virtual keyboard specifically is: after the touch operation performed by the user on the character displayed on the virtual keyboard is received, displaying character information corresponding to the touch operation in the input box.

Optionally, the processor 183 is further configured to execute:
displaying one or more toggle keys on the touchscreen, where the toggle key is a digit toggle key, a lowercase letter toggle key, an uppercase letter toggle key, a symbol toggle key, or an emoticon toggle key; and
when a touch instruction on the digit toggle key is acquired, displaying the first characters displayed on the virtual keyboard as digits; or
when a touch instruction on the lowercase letter toggle key is acquired, displaying the first characters displayed on the virtual keyboard as lowercase letters; or
when a touch instruction on the uppercase letter toggle key is acquired, displaying the first characters displayed on the virtual keyboard as uppercase letters; or
when a touch instruction on the symbol toggle key is acquired, displaying the first characters displayed on the virtual keyboard as symbols; or
when a touch instruction on the emoticon toggle key is acquired, displaying the first characters displayed on the virtual keyboard as emoticons.

Optionally, the processor 183 is further configured to execute:
acquiring a space key input by the user by touching the virtual keyboard, and displaying the space key in the input box.

Optionally, the processor 183 is further configured to execute:
acquiring a keyboard hiding key input by the user by touching the virtual keyboard;
hiding the virtual keyboard, and displaying a scroll bar in the input box;
acquiring a scroll operation performed by the user on the input box, and displaying content in the input box in a scrolling manner; and
displaying the virtual keyboard when a cursor input by the user in the input box is acquired.

For an operation process of the touchscreen electronic device 18, refer to the processing process of the input method of a touchscreen electronic device.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) or a processor to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An input method of a touchscreen electronic device, comprising:
displaying a virtual keyboard on a touchscreen of the touchscreen electronic device, wherein the virtual keyboard is configured to input corresponding character information according to a touch operation performed by a user on a character displayed on the virtual keyboard, and displaying some first characters on the virtual keyboard;
acquiring a first operation instruction; and
replacing, according to the first operation instruction, the some first characters displayed on the virtual keyboard with some other first characters.

2. The method according to claim 1, wherein the first characters are digits, uppercase letters, lowercase letters, symbols, or emoticons.

3. The method according to claim 1 or 2, wherein the method further comprises:
displaying an input box on the touchscreen, wherein
that the virtual keyboard is configured to input corresponding character information according to a touch operation performed by a user on a character displayed on the virtual keyboard specifically is: after the touch operation performed by the user on the character displayed on the virtual keyboard is received, displaying character information corresponding to the touch operation in the input box.

4. The method according to any one of claims 1 to 3, wherein the first operation instruction is a slide operation instruction on the touchscreen.

5. The method according to claim 4, wherein the slide operation instruction comprises: a slide left operation instruction, a slide right operation instruction, a slide up operation instruction, or a slide down operation instruction.

6. The method according to any one of claims 2 to 5, wherein the method further comprises:
displaying one or more toggle keys on the touchscreen, wherein the toggle key is a digit toggle key, a lowercase letter toggle key, an uppercase letter toggle key, a symbol toggle key, or an emoticon toggle key; and
when a touch instruction on the digit toggle key is acquired, displaying the first characters displayed on the virtual keyboard as digits; or
when a touch instruction on the lowercase letter toggle key is acquired, displaying the first characters displayed on the virtual keyboard as lowercase letters; or
when a touch instruction on the uppercase letter toggle key is acquired, displaying the first characters displayed on the virtual keyboard as uppercase letters; or
when a touch instruction on the symbol toggle key is acquired, displaying the first characters displayed on the virtual keyboard as symbols; or
when a touch instruction on the emoticon toggle key is acquired, displaying the first characters displayed on the virtual keyboard as emoticons.

7. A user interface disposed on the touchscreen electronic device according to claims 1 to 6, wherein the user interface comprises:
a virtual keyboard displayed on a touchscreen of the touchscreen electronic device, wherein the virtual keyboard is configured to input corresponding character information according to a touch operation performed by a user on a character displayed on the virtual keyboard;
some first characters displayed on the virtual keyboard; and
some other first characters displayed on the virtual keyboard, wherein the some other first characters are acquired by using a first operation instruction on the touchscreen.

8. The user interface according to claim 7, wherein in the some first characters displayed on the virtual keyboard, the first characters are digits, uppercase letters, lowercase letters, symbols, or emoticons.

9. The user interface according to claim 7 or 8, wherein the user interface further comprises:
a displayed input box, wherein character information displayed in the input box is character information corresponding to a received touch operation performed by the user on the character displayed on the virtual keyboard.

10. The user interface according to any one of claims 7 to 9, wherein the first operation instruction is a slide operation instruction on the touchscreen.

11. The user interface according to claim 10, wherein the slide operation instruction comprises:
a slide left operation instruction, a slide right operation instruction, a slide up operation instruction, or a slide down operation instruction.

12. The user interface according to any one of claims 8 to 11, wherein the user interface further comprises:
one or more toggle keys displayed on the touchscreen, wherein the toggle key is a digit toggle key, a lowercase letter toggle key, an uppercase letter toggle key, a symbol toggle key, or an emoticon toggle key, wherein
if the first characters displayed on the touchscreen are digits, the digits are displayed by acquiring a touch instruction on the digit toggle key; or
if the first characters displayed on the touchscreen are lowercase letters, the digits are displayed by acquiring a touch instruction on the lowercase letter toggle key; or
if the first characters displayed on the touchscreen are uppercase letters, the digits are displayed by acquiring a touch instruction on the uppercase letter toggle key; or
if the first characters displayed on the touchscreen are symbols, the digits are displayed by acquiring a touch instruction on the symbol toggle key; or
if the first characters displayed on the touchscreen are emoticons, the digits are displayed by acquiring a touch instruction on the emoticon toggle key.

13. An input apparatus of a touchscreen electronic device, comprising:
a displaying unit, configured to display a virtual keyboard on a touchscreen of the touchscreen electronic device, wherein the virtual keyboard is configured to input corresponding character information according to a touch operation performed by a user on a character displayed on the virtual keyboard, and display some first characters on the virtual keyboard;
an acquiring unit, configured to acquire a first operation instruction; and
a processing unit, configured to replace, according to the first operation instruction, the some first characters displayed on the virtual keyboard with some other first characters.

14. The apparatus according to claim 13, wherein the first characters displayed by the displaying unit are digits, uppercase letters, lowercase letters, symbols, or emoticons.

15. The apparatus according to claim 13 or 14, wherein
the displaying unit is further configured to display an input box on the touchscreen, and after the touch operation performed by the user on the character displayed on the virtual keyboard is received, display character information corresponding to the touch operation in the input box.

16. The apparatus according to any one of claims 13 to 15, wherein the first operation instruction acquired by the acquiring unit is a slide operation instruction on the touchscreen.

17. The apparatus according to claim 16, wherein the slide operation instruction acquired by the acquiring unit comprises: a slide left operation instruction, a slide right operation instruction, a slide up operation instruction, or a slide down operation instruction.

18. The apparatus according to any one of claims 14 to 17, wherein
the displaying unit is further configured to display one or more toggle keys on the touchscreen, wherein the toggle key is a digit toggle key, a lowercase letter toggle key, an uppercase letter toggle key, a symbol toggle key, or an emoticon toggle key; and
the processing unit is further configured to: when a touch instruction on the digit toggle key is acquired, display the first characters displayed on the virtual keyboard as digits; or when a touch instruction on the lowercase letter toggle key is acquired, display the first characters displayed on the virtual keyboard as lowercase letters; or when a touch instruction on the uppercase letter toggle key is acquired, display the first characters displayed on the virtual keyboard as uppercase letters; or when a touch instruction on the symbol toggle key is acquired, display the first characters displayed on the virtual keyboard as symbols; or when a touch instruction on the emoticon toggle key is acquired, display the first characters displayed on the virtual keyboard as emoticons.
